# EUROPEAN PATENT SPECIFICATION

(11) **EP 4 462 520 B1**
(45) Date of publication and mention of the grant of the patent: **09.09.2026**
(21) Application number: 22927912.0
(22) Date of filing: 28.02.2022
(51) Int. Cl.: H01M 4/66, H01M 4/80, H01M 4/62, H01M 4/02

(54) **POLE PIECE, ELECTRODE ASSEMBLY, BATTERY CELL, BATTERY, ELECTRICAL DEVICE, AND METHOD AND DEVICE FOR MANUFACTURING POLE PIECE**
POLSTÜCK, ELEKTRODENANORDNUNG, BATTERIEZELLE, BATTERIE, ELEKTRISCHE VORRICHTUNG SOWIE VERFAHREN UND VORRICHTUNG ZUR HERSTELLUNG DES POLSTÜCKS
PIÈCE POLAIRE, ENSEMBLE ÉLECTRODE, ÉLÉMENT DE BATTERIE, BATTERIE, DISPOSITIF ÉLECTRIQUE, ET PROCÉDÉ ET DISPOSITIF DE FABRICATION DE PIÈCE POLAIRE

(43) Date of publication of application: 13.11.2024
(73) Proprietor: Contemporary Amperex Technology Co., Limited, Ningde, Fujian 352100 (CN)
(72) Inventor: CHEN, Yujie, Ningde, Fujian 352100 (CN); GE, Xiaoming, Ningde, Fujian 352100 (CN); FAN, Yulei, Ningde, Fujian 352100 (CN)
(74) Representative: Holt, Lucy Rose
(86) International application number: PCT/CN2022/078468
(87) International publication number: WO 2023/159631

(56) References cited:
- EP-A1- 0 692 546
- CN-A- 103 794 754
- CN-A- 112 310 406
- CN-A- 113 270 566
- CN-A- 113 451 583
- CN-A- 114 094 286
- JP-A- 2001 148 245
- US-A1- 2006 240 323

## Description

### TECHNICAL FIELD

This application relates to the field of batteries, and in particular, to an electrode plate, an electrode assembly, a battery cell, a battery, an electrical device, and an electrode plate manufacturing method and equipment.

### BACKGROUND

In the current design of some electrode assemblies, foamed metal is used as a substrate of an electrode plate, for example, directly used as a negative electrode plate. However, the electrode assembly that adopts the foamed metal is prone to deform, thereby severely impairing electrochemical performance of the electrode assembly. US2006240323A1 relates generally to alkaline storage batteries including nickelcadmium storage batteries and nickel-hydrogen storage batteries, and lithium ion storage-batteries and other nonaqueous storage batteries; and a method of manufacturing these storage batteries. In particular this document relates to a processing technique for a part of the electrode substrate to which the current collector is joined. CN 103 794 754 A relates generally to a composite negative electrode, a preparation method thereof, an electrochemical power source and an application thereof.

EP0692546A1 discloses a metal foam product material for electrodes, wherein the pores are filled locally with a material which is essentially solid after application.

### SUMMARY

In view of the above problems, this application provides an electrode plate, an electrode assembly, a battery cell, a battery, an electrical device, and an electrode plate manufacturing method and equipment to alleviate the problem of the electrode assembly being prone to deform.

Aspects of the invention are set out in the claims. According to a first aspect, this application provides an electrode plate. The electrode plate includes a foamed metal layer. A part of the foamed metal layer is a filled region. Pores of the filled region are filled with a filler. The filler extends continuously from one edge to another edge of the foamed metal layer, the two edges being arranged on two opposite sides along a first preset direction. The first preset direction is perpendicular to a thickness direction of the foamed metal layer.

In the technical solution disclosed in this application, a part of the foamed metal layer is configured as a filled region that is filled with a filler. The filler extends continuously from one edge to the other edge of the foamed metal layer, and the two edges are arranged on two opposite sides along the first preset direction. In this way, the foamed metal layer can better withstand a tensile force along the first preset direction during processing. The tensile strength of the electrode plate is increased, thereby alleviating the problem that the electrode assembly is prone to deform.

In some embodiments, according to the first aspect, a first example in the first aspect is put forward. In the first preset direction, a dimension of the foamed metal layer is L1; and, in a second preset direction, a dimension of the foamed metal layer is L2; and the second preset direction is perpendicular to the first preset direction and the thickness direction of the foamed metal layer. An angle between an extension direction of the filler in the filled region and the first preset direction is α, and satisfies 0° ≤ α ≤ arctan((0.5 × L2)/L1). In this design, the angle between the extension direction of the filler and the first preset direction is controlled to be a relatively small angle. In this way, the filler can effectively improve the tensile performance of the foamed metal layer along the first preset direction, and in turn, effectively increase the tensile strength of the electrode plate.

In some embodiments, according to the first aspect or an example of this first aspect, a second example of the first aspect is put forward. A dimension of the filler in a single filled region in a second preset direction is greater than or equal to 1 mm. The second preset direction is perpendicular to the first preset direction and the thickness direction of the foamed metal layer. In this design, the dimension of the filler in the second preset direction is controlled to be above a specified criterion to avoid deficient width of the filler and facilitate operation. In addition, this ensures good continuity of the filler in the first preset direction, and enables the filler to effectively increase the tensile strength of the electrode plate.

In some embodiments, according to any one of the first aspect or the first example to the second example of the first aspect, a third example of the first aspect is disclosed. A dimension of the filler in a single filled region in a second preset direction is less than or equal to 4 mm, and the second preset direction is perpendicular to the first preset direction and the thickness direction of the foamed metal layer. In this design, the dimension of the filler in the second preset direction is controlled below a specified criterion to avoid excessive width of the filler. This can effectively prevent an excessive expansion force at a local position from being caused by excessive deposition of lithium metal on both sides of the filler or by other factors, and avoid deformation of the electrode assembly caused by the excessive expansion force at the local position.

In some embodiments, according to any one of the first aspect or the first example to the third example of the first aspect, a fourth example of the first aspect is disclosed. In a second preset direction, a dimension of the foamed metal layer is L2, a sum of dimensions of the fillers in the filled regions is L3, and an L3/L2 ratio is less than or equal to 10%. The second preset direction is perpendicular to the first preset direction and the thickness direction of the foamed metal layer. In this design, the ratio of the sum of dimensions of the fillers in the second preset direction to the dimension of the foamed metal layer in the second preset direction is controlled below a specified criterion. In this way, the filler is ensured to effectively increase the tensile strength of the electrode plate, and leave a relatively large unfilled region in the foamed metal layer to accommodate lithium metal and the like, thereby helping to keep a relatively high energy density of the electrode assembly.

According to the invention, in a second preset direction, a plurality of the filled regions are arranged. A dimension of the foamed metal layer is L2, a distance of the filler between two adjacent filled regions is L4, and an L4/L2 ratio is greater than or equal to 10%. The second preset direction is perpendicular to the first preset direction and the thickness direction of the foamed metal layer. In this design, the ratio of the distance between two adjacent fillers in the second preset direction to the dimension of the foamed metal layer in the second preset direction is controlled to be above a specified criterion. In this way, a specified distance is maintained between adjacent fillers, thereby facilitating uniform distribution of a plurality of fillers along the second preset direction, and enabling the filler to more effectively increase the overall tensile strength of the electrode plate.

In some embodiments, according to any one of the first aspect or the first example to the fifth example of the first aspect, a sixth example of the first aspect is disclosed. In a second preset direction, a plurality of filled regions are arranged, and the fillers in the plurality of filled regions are distributed uniformly. The second preset direction is perpendicular to the first preset direction and the thickness direction of the foamed metal layer. In this design, a plurality of fillers are distributed uniformly along the second preset direction, thereby enabling the fillers to more effectively increase the overall tensile strength of the electrode plate.

In some embodiments, according to any one of the first aspect or the first example to the sixth example of the first aspect, a seventh example of the first aspect is disclosed. The foamed metal layer includes a first edge and a second edge that are arranged along a length direction of the foamed metal layer as well as a third edge and a fourth edge that are arranged along a width direction of the foamed metal layer; the filled region includes a first filled region in which the filler extends continuously from the first edge to the second edge; and/or, the filled region includes a second filled region in which the filler extends continuously from the third edge to the fourth edge. In this design, the filled region includes a first filled region in which the filler extends continuously from the first edge to the second edge, so that the filler can effectively improve the tensile performance of the foamed metal layer along the length direction. The filled region includes a second filled region in which the filler extends continuously from the third edge to the fourth edge, so that the filler can effectively improve the tensile performance of the foamed metal layer along the width direction. When both the first filled region and the second filled region are configured, the fillers are distributed in the form of a lattice. In this way, the surroundings of the foamed metal layer can better withstand the tensile force generated during processing, thereby more effectively improving the overall tensile strength of the electrode plate.

In some embodiments, according to the seventh example of the first aspect, an eighth example of the first aspect is disclosed. The filled region includes the first filled region in which the filler extends continuously from the first edge to the second edge. In the width direction of the foamed metal layer, a dimension of the foamed metal layer is L5, a sum of dimensions of the first filled region is L6, and an L6/L5 ratio is greater than or equal to 3%. In this design, the filled region includes the first filled region in which the filler extends continuously from the first edge to the second edge, and the ratio of the sum of dimensions of the fillers in the width direction of the foamed metal layer to the dimension of the foamed metal layer in the width direction of the foamed metal layer is controlled to be above a specified criterion. In this way, the filler endows the foamed metal layer with enough tensile strength to withstand the tension generated during processing.

In some embodiments, according to any one of the first aspect or the first example to the eighth example of the first aspect, a ninth example of the first aspect is disclosed. The electrode plate is an electrode plate of an electrode assembly that assumes a jelly-roll structure, and the first preset direction includes a winding direction of the jelly-roll structure. In this design, the filler extends continuously along the winding direction of the jelly-roll structure, so that the electrode plate can properly withstand the tension generated in the winding direction during a winding process, thereby alleviating the problem that the j elly-roll electrode assembly is prone to deform.

In some embodiments, according to any one of the first aspect or the first example to the ninth example of the first aspect, a tenth example of the first aspect is disclosed. The filler is a polymer. Optionally, the filler is a rubber material. Optionally, the rubber material includes one or more of natural rubber, styrene-butadiene rubber, high-cis polybutadiene rubber, isoprene rubber, neoprene rubber, butyl rubber, nitrile butadiene rubber, or silicone rubber. In this design, the polymer is selected as a filler. By virtue of good mechanical strength, the polymer enables the filler to better increase the tensile strength of the electrode plate.

According to the invention, in the thickness direction of the foamed metal layer, a dimension of the foamed metal layer is H1, and a thickness of the filler in a single filled region is H2, satisfying: H2/H1 = (0.95 to 1.05). In this design, the thickness of the filler in a single filled region is close to or equal to the thickness of the foamed metal layer. On the one hand, the filler is endowed with higher mechanical strength to increase the tensile strength of the electrode plate. On the other hand, the filler can effectively support the adjacent stacked structures in the electrode assembly, thereby alleviating the problem that the electrode plate is deformed by the pressure received in the stacking direction.

In some embodiments, according to the tenth example of the first aspect, a twelfth example of the first aspect is disclosed. In the thickness direction of the foamed metal layer, two opposite surfaces of the filler cover two opposite surfaces of the foamed metal layer respectively. In this design, two surfaces of the filler in the thickness direction cover the surfaces of the foamed metal layer respectively. On the one hand, because a single filled region is relatively thick, the filler is endowed with higher mechanical strength to increase the tensile strength of the electrode plate, and at the same time, the filler is enabled to effectively support the adjacent stacked structures in the electrode assembly. On the other hand, since the filler is a polymer, due to the insulating properties of the polymer, the filler can prevent the lithium metal and the like from being deposited on the surface of the filler, and therefore, from increasing the expansion force at a local position.

In some embodiments, according to the eleventh or twelfth example of the first aspect, a thirteenth example of the first aspect is disclosed. The filler includes a filling surface arranged along the thickness direction of the foamed metal layer. The filling surface includes a bonding portion. The bonding portion is configured to bond the electrode plate and a separator together. In this design, the filling surface includes a bonding portion configured to bond the electrode plate and the separator together, thereby effectively preventing the electrode plate from being dislocated when the electrode assembly shakes.

In some embodiments, according to the thirteenth example of the first aspect, a fourteenth example of the first aspect is disclosed. The material of the bonding portion includes an adhesive. Optionally, the material of the bonding portion includes one or more of polyvinylidene fluoride or polymethyl methacrylate. In this design, the adhesive is selected to form the bonding portion, thereby being easy to operate and ensuring that the bonding portion can effectively bond the electrode plate and the separator together. Furthermore, polyvinylidene fluoride and polymethyl methacrylate are selected as the adhesive, so that the bonding portion is stable in the electrolyte solution, and the bonding portion can serve to avoid dislocation of the electrode plate in a longer period.

In some embodiments, according to any one of the first aspect or the first example to the fourteenth example of the first aspect, a fifth example of the first aspect is disclosed. The electrode plate is a negative electrode plate. In this design, the electrode plate is configured as a negative electrode plate, and the unfilled region can provide space for depositing lithium metal and the like, thereby helping the electrode assembly maintain a relatively high energy density.

In some embodiments, according to the fifteenth example of the first aspect, a sixteenth example of the first aspect is disclosed. Along the thickness direction of the foamed metal layer, a projection of the filler is configured to at least partially overlap a projection of a coated region of a positive electrode plate. In this design, the filler is configured to at least partially overlap the coated region of the positive electrode plate. When the negative electrode plate and the positive electrode plate are stacked to form an electrode assembly, the negative electrode plate can better withstand the pressure from the positive electrode plate, thereby alleviating the compressive deformation of the negative electrode plate, and in turn, alleviating the problem that the electrode assembly is prone to deform.

According to a second aspect, this application provides an electrode assembly. The electrode assembly includes a separator and the electrode plate disclosed in the foregoing embodiment.

According to the invention, this application provides a battery cell. The battery cell includes a shell and the electrode assembly disclosed in the foregoing embodiment. The electrode assembly is accommodated in the shell.

According to a fourth aspect, this application provides a battery, including a box and a plurality of battery cells disclosed in the foregoing embodiment. The plurality of battery cells are accommodated in the box.

According to a fifth aspect, this application provides an electrical device. The electrical device includes the battery cell disclosed in the foregoing embodiment.

According to a sixth aspect, this application provides an electrode plate manufacturing method according to claim 13.

In the technical solutions of some embodiments of this application, the electrode plate disclosed in the foregoing embodiment can be manufactured to alleviate the problem that the electrode assembly is prone to deform.

According to a seventh aspect, this application provides a piece of electrode plate manufacturing equipment, including a providing apparatus and a filling apparatus. The providing apparatus is configured to provide a foamed metal layer. The filling apparatus is configured to fill pores in a partial region of the foamed metal layer with a filler to form a filled region. The filler extends continuously from one edge to another edge of the foamed metal layer, the two edges being arranged on two opposite sides along a first preset direction. The first preset direction is perpendicular to a thickness direction of the foamed metal layer.

In the technical solutions of some embodiments of this application, the electrode plate disclosed in the foregoing embodiment can be manufactured to alleviate the problem that the electrode assembly is prone to deform.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to some embodiments of this application;
FIG. 2 is an exploded view of a battery according to some embodiments of this application;
FIG. 3 is an exploded view of a battery cell shown in FIG. 2;
FIG. 4 is a schematic structural diagram of an electrode assembly according to some embodiments of this application;
FIG. 5 is a schematic structural top view of an electrode plate in a first design according to some embodiments of this application;
FIG. 6 is a schematic cross-sectional view of FIG. 5 sectioned along an F-F line;
FIG. 7 is a schematic structural top view of an electrode plate in a second design according to some embodiments of this application;
FIG. 8 is a schematic cross-sectional view of FIG. 7 sectioned along a G-G line;
FIG. 9 is a schematic structural top view of an electrode plate in a third design according to some embodiments of this application;
FIG. 10 is a schematic structural top view of an electrode plate in a fourth design according to some embodiments of this application;
FIG. 11 is a schematic structural top view of an electrode plate in a fifth design according to some embodiments of this application;
FIG. 12 is a schematic structural top view of an electrode plate in a sixth design according to some embodiments of this application;
FIG. 13 is a schematic structural side view of an electrode plate in a sixth design according to some embodiments of this application;
FIG. 14 is a schematic cross-sectional side view of an electrode assembly according to some embodiments of this application;
FIG. 15 is a process chart of an electrode plate manufacturing method according to some embodiments of this application; and
FIG. 16 is a schematic structural diagram of a piece of electrode plate manufacturing equipment according to some embodiments of this application.

### List of reference numerals:

vehicle 1000;
battery 100, controller 200, motor 300;
box 10, first part 11, second part 12; accommodation space 13;
battery cell 20, shell 21, electrode assembly 22, electrode terminal 23, pressure relief structure 24;
housing 211, cover 212, hermetic space 213, electrode plate 220, negative electrode plate 221, positive electrode plate 222, separator 223;
foamed metal layer 2211, unfilled region 22110, filled region 22111, first edge 22112, second edge 22113, third edge 22114, fourth edge 22115, first filled region 22111a, second filled region 22111b, filling surface 22111c;
bonding portion 2212;
positive active material layer 2221, current collector 2222 of positive electrode plate;
electrode plate manufacturing equipment 2000;
providing apparatus 2100; filling apparatus 2200;
thickness direction A of foamed metal layer, length direction B of foamed metal layer, width direction C of foamed metal layer, first preset direction D, second preset direction E.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence.

In the description of embodiments of this application, a directional or a positional relationship indicated by the terms such as "length", "width", "thickness", "up", "down", "in", and "out" is a directional or positional relationship based on the illustration in the drawings, and is merely intended for ease or brevity of description of embodiments of this application, but not intended to mean or imply that the indicated device or component is necessarily located in the specified direction/position or constructed or operated in the specified direction/position. Therefore, such terms are not to be understood as a limitation on embodiments of this application.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The embodiments of this application do not limit the shape of the battery cell. In terms of the packaging form, the battery cell is typically classed into three types: cylindrical battery cell, prismatic battery cell, and pouch-type battery cell. The type of the battery cell is not limited herein.

A battery cell includes an electrode assembly and an electrolyte solution. The electrode assembly includes a positive electrode plate, a negative electrode plate, and a separator. The battery cell works primarily by shuttling metal ions between the positive electrode plate and the negative electrode plate. The separator may be made of a material such as PP (polypropylene, polypropylene) or PE (polyethylene, polyethylene). The positive electrode plate includes a positive current collector and a positive active material layer. The positive active material layer is applied onto a surface of the positive current collector. The positive current collector includes a positive coated region and a positive tab connected to the positive coated region. The positive coated region is coated with a positive active material layer, and the positive tab is not coated with the positive active material layer. Using a lithium-ion battery cell as an example, the positive current collector may be made of aluminum. The positive active material layer includes a positive active material. The positive active material may be lithium cobalt oxide, lithium iron phosphate, ternary lithium, lithium manganese oxide, or the like. The negative electrode plate includes a negative current collector and a negative active material layer. The negative active material layer is applied onto a surface of the negative current collector. The negative current collector includes a negative coated region and a negative tab connected to the negative coated region. The negative coated region is coated with a negative active material layer, and the negative tab is not coated with the negative active material layer. The negative current collector may be made of copper. The negative active material layer includes a negative active material. The negative active material may be carbon, silicon, or the like. In addition, the electrode assembly may be of a j elly-roll type structure or a stacked type structure, without being limited herein.

In this application, the battery means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The applicant hereof has noticed that, in the current design of some electrode assemblies, foamed metal is used as a substrate of an electrode plate, for example, directly used as a negative electrode plate. When selecting a foamed metal layer, in order to leave enough space for depositing metallic lithium or filling the space with an active material or the like, and, in order to reduce the amount of metal consumed, generally the selected foamed metal is of a relatively high porosity. For example, the porosity is greater than or equal to 70%. Consequently, when the foamed metal layer is subjected to lateral tension during processing, the foamed metal layer is prone to tensile deformation, thereby elongating the foamed metal layer along the tensile direction, and in turn, changing the foamed metal layer in length and thickness.

Moreover, in a preparation process of the electrode assembly, the designed capacity is constant. Using a negative electrode plate as an example, for a negative electrode plate of a specified specification, a designed deposition amount V1 of lithium metal in the foamed metal layer is constant. In the electrode assembly, the electrode plate usually fits the separator tightly. Therefore, when the foamed metal layer is stretched and deformed, the amount V2 of lithium metal that can be actually deposited on the foamed metal layer is less than the designed deposition amount of lithium metal. When the deposition amount of lithium metal reaches V2, the excess lithium metal will be deposited on the surface of the foamed metal layer. This will give rise to an expansion force and cause the electrode assembly to deform. In addition, when the excess lithium metal is deposited on the surface of the foamed metal layer, the surface current density will be high, and lithium dendrites and side reactions are prone to occur.

To alleviate the problem that the electrode assembly is prone to deform, an existing technical solution include optimization of a charge-and-discharge policy and use of a housing of high mechanical strength. However, the above technical solution can merely alleviate the problem of deformation of an electrode assembly stressed after the electrode plates are stacked. The problem that the electrode plates are prone to be stressed and deformed and lead to deformation of the electrode assembly during preparation of the electrode assembly has not yet been effectively solved.

In view of the above factors, the applicant hereof has designed an electrode plate after in-depth research. A part of a foamed metal layer is used as a filled region. Pores in the filled region are filled with a filler. On this basis, the filler is configured to extend continuously from one side to the other side of the foamed metal layer, the two sides being arranged opposite to each other. In this way, the foamed metal layer is more capable of withstanding the tensile force generated during the processing, thereby increasing the tensile strength of the electrode plate and alleviating the problem that the electrode plate is prone to be stressed and deformed during preparation of the electrode assembly, and in turn, alleviating the problem that the electrode assembly is prone to deform.

The technical solutions disclosed in an embodiment of this application are applicable to an electrode plate, an electrode assembly that adopts the electrode plate, a battery cell that adopts the electrode assembly, a battery that adopts the battery cell, an electrical device that adopts the battery cell, and a method and equipment for manufacturing the electrode plate. The electrode plate may be a negative electrode plate or a positive electrode plate.

In this application, the electrical device may be in various forms, for example, a mobile phone, a portable device, a notebook computer, an electric power cart, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, such as a game console, an electric car toy, an electric ship toy, an electric airplane toy, and the like. The electric tool includes an electric tool for metal cutting, an electric grinding tool, an electric assembly tool, an electric tool for railways, such as an electric drill, an electric grinder, an electric wrench, an electric screwdriver, an electric hammer, an electric impact drill, a concrete vibrator, or an electric planer.

For ease of description in the following embodiment, a vehicle 1000 is used as an example of the electrical device disclosed in an embodiment of this application.

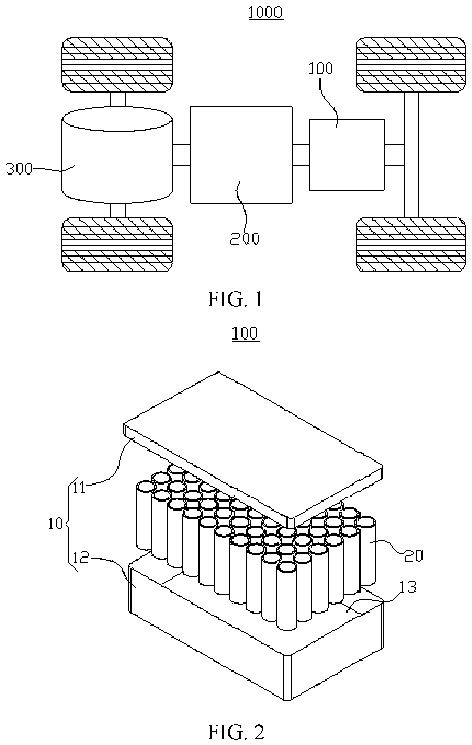

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

Referring to FIG. 2, FIG. 2 is an exploded view of a battery 100 according to some embodiments of this application. The battery 100 may include a box 10 and a battery cell 20. The battery cell 20 is accommodated in the box 10. The box 10 is configured to accommodate the battery cell 20. The box 10 may assume various structures. In some embodiments, the box 10 may include a first part 11 and a second part 12. The first part 11 and the second part 12 fit each other. The first part 11 and the second part 12 together define an accommodation space 13 configured to accommodate the battery cell 20. The second part 12 may be a hollow structure opened at one end. The first part 11 is a plate structure. The first part 11 fits and covers the opening of the second part 12 to form the box 10 that includes the accommodation space 13. The first part 11 and the second part 12 each may be a hollow structure opened at one end. The opening of the first part 11 fits the opening of the second part 12 to form the box 10 that includes the accommodation space 13. The first part 11 and the second part 12 may be in various shapes, such as a cylinder or a cuboid.

There may be one or more battery cells 20 in the battery 100. If there are a plurality of battery cells 20, the plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 are connected in series, parallel, or series-and-parallel pattern to form a battery 100 module first, and then a plurality of battery 100 modules are connected in series, parallel, or series-and-parallel pattern to form an entirety that is to be accommodated in the box 10. The battery 100 may further include a structures. For example, the plurality of battery cells 20 may be electrically connected to each other by the busbar component, so as to implement series, parallel, or series-and-parallel connection between the plurality of battery cells 20.

Each battery cell 20 may be, but is not limited to, a secondary battery 100 or primary battery 100; or, a lithium-sulfur battery 100, a sodium-ion battery 100, or a magnesium-ion battery 100. The battery cell 20 may be in the shape of a cylinder, flat body, cuboid, or the like.

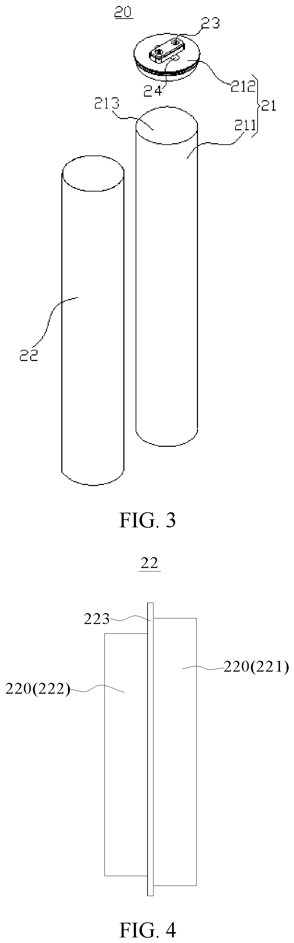

Referring to FIG. 3, FIG. 3 is an exploded view of the battery cell 20 shown in FIG. 2. The battery cell 20 is a minimum unit for making up a battery 100. Referring to FIG. 3, the battery cell 20 may include a shell 21 and an electrode assembly 22. The electrode assembly 22 is accommodated in the shell 21. In some embodiments, the shell 21 may be further configured to accommodate an electrolyte such as an electrolyte solution. The shell 21 may be in the form of various structures.

The shell 21 may include a housing 211 and a cover 212.

The housing 211 is a component configured to fit the cover 212 to form an internal hermetic space 213 of the battery cell 20. The formed hermetic space 213 may be used for accommodating the electrode assembly 22, an electrolyte solution, and other components. The housing 211 and the cover 212 may be stand-alone components. An opening may be created on the housing. At the opening, the cover 212 fits the opening to form the internal environment of the battery cell 20. Without limitation, the cover 212 and the housing 211 may be formed in one piece instead. Specifically, the cover 212 and the housing 211 may form a common connection face before other components are put into the housing. Subsequently, when the housing 211 needs to be sealed, the cover 212 is made to fit the housing 211. The housing 211 may be in various shapes and sizes, such as a cuboid, cylinder, or hexagonal prism. Specifically, the shape of the housing 211 may depend on the specific shape and size of the electrode assembly 22. The housing 211 may be made of a variety of materials such as copper, iron, aluminum, stainless steel, aluminum alloy, or plastic, without being particularly limited herein.

The cover 212 is a component that covers and fits on the opening of the housing 211 to isolate the internal environment of the battery cell 20 from the external environment. Without limitation, the shape of the cover 212 may be adapted to the shape of the housing 211 to fit the housing 211. In some embodiments, the cover 212 may be made of a material of appropriate hardness and strength (such as aluminum alloy), thereby making the cover 212 not prone to deform in a case of being pressed or impacted, and improving the structural strength and safety performance of the battery cell 20. The cover 212 may be made of other materials such as copper, iron, aluminum, stainless steel, aluminum alloy, or plastic, without being particularly limited herein. In some embodiments, an insulator may be further disposed on an inner side of the cover 212. The insulator may be configured to isolate an electrically connected component in the housing 211 from the cover 212 to reduce short-circuit risks. For example, the insulator may be plastic, rubber, or the like.

Functional components such as electrode terminals 23 may be disposed on the cover 212. The electrode terminals 23 are mounted on the cover 212. The electrode terminals 23 are electrically connected to the electrode assembly 22 to output electrical energy generated by the battery cell 20. As an example, the electrode terminals 23 may be electrically connected to the electrode assembly 22 by a current collecting plate (not shown in the drawing).

The battery cell 20 may further include a pressure relief structure 24. The pressure relief structure 24 is configured to release pressure inside the battery cell 20 when an internal pressure or temperature of the battery cell 20 reaches a preset value. As an example, the pressure relief structure 24 may be a component such as an explosion-proof valve, a rupture disk, a gas valve, a pressure relief valve, or a safety valve.

During assembling of the battery cell 20, the electrode assembly 22 may be put into the housing 211 first. The housing 211 is filled with an electrolyte, and then the cover 212 fits on the opening of the housing 211.

Referring to FIG. 4, FIG. 4 is a schematic structural diagram of an electrode assembly 22 according to some embodiments of this application. The electrode assembly 22 is a component that reacts electrochemically in the battery cell 20. The housing 211 may contain one or more electrode assemblies 22. The electrode assembly 22 is typically formed by winding or stacking electrode plates 220 and a separator 223. The electrode plates 220 include a positive electrode plate 222 and a negative electrode plate 221 located on two sides of the separator 223 respectively.

Next, the specific structure of the electrode plate 220 is described in detail with reference to drawings.

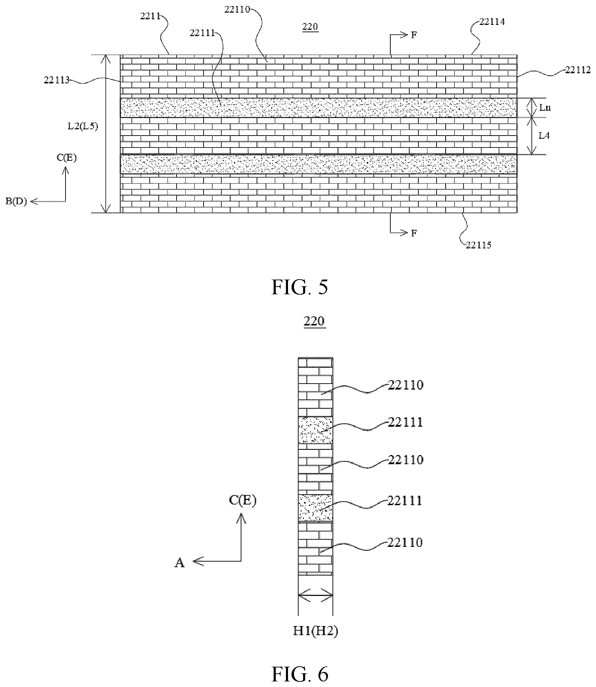

Referring to FIG. 5 to FIG. 9, this application provides an electrode plate 220, including a foamed metal layer 2211. A part of the foamed metal layer 2211 is a filled region 22111. Pores of the filled region 22111 are filled with a filler. The filler extends continuously from one edge to another edge of the foamed metal layer 2211, the two edges being arranged on two opposite sides along a first preset direction D. The first preset direction D is perpendicular to a thickness direction A of the foamed metal layer.

A part of the foamed metal layer 2211 is a filled region 22111, which means that the foamed metal layer 2211 further includes an unfilled region 22110. Pores in the unfilled region 22110 are used for depositing lithium metal. The pores in the filled region 22111 are filled with a filler. The porosity of the filled region is less than that of the unfilled region 22110 in the foamed metal layer 2211.

The foamed metal layer 2211 means a layered porous metal body that includes pores inside. The porosity of the unfilled region 22110 is optionally 20% to 95%, and further optionally 60% to 95%.

The filler is a substance that fills the pores of the foamed metal layer 2211, and may be made of one material or a plurality of materials. Each filler material may be a conductive material or a non-conductive material.

The electrode plate 220 may be a negative electrode plate 221 or a positive electrode plate 222. The electrode plate 220 includes a foamed metal layer 2211, which means that the electrode plate 220 uses the foamed metal layer 2211 as a substrate and may include other structures other than the foamed metal layer 2211 according to design requirements. When the electrode plate 220 is used as a negative electrode plate 221, lithium metal and the like may be deposited in the pores of the unfilled region 22110. Therefore, the two surfaces of the foamed metal layer 2211, which are arranged on two sides along the thickness direction A of the foamed metal layer, may be not coated with the negative active material. When the electrode plate 220 is used as a positive electrode plate 222, the unfilled region 22110 and/or the two surfaces of the foamed metal layer, which are arranged on two sides along the thickness direction A of the foamed metal layer, may be coated with the positive active material.

The filler extends continuously from one edge to the other edge of the foamed metal layer 2211, and the two edges are arranged on two opposite sides along the first preset direction D, which means that one end of the filler is located at one edge of the foamed metal layer 2211, the other end of the filler is located at the other edge of the foamed metal layer 2211, and the two edges are arranged on two opposite sides along the first preset direction D. The filler is arranged continuously between the two ends without interruption.

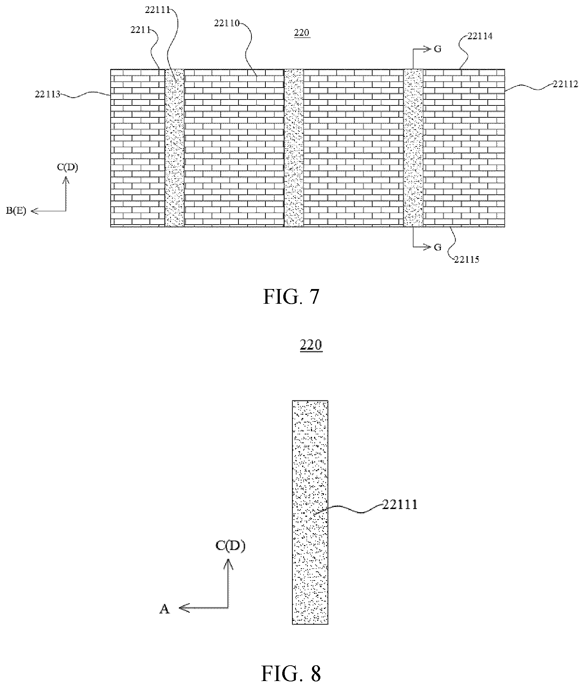

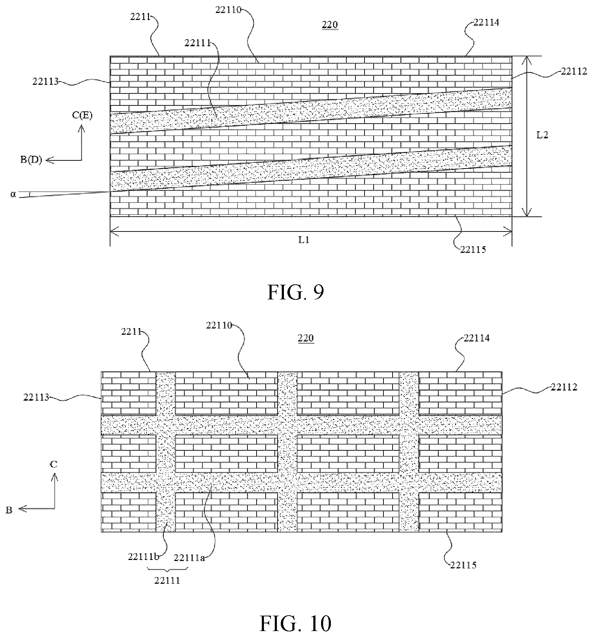

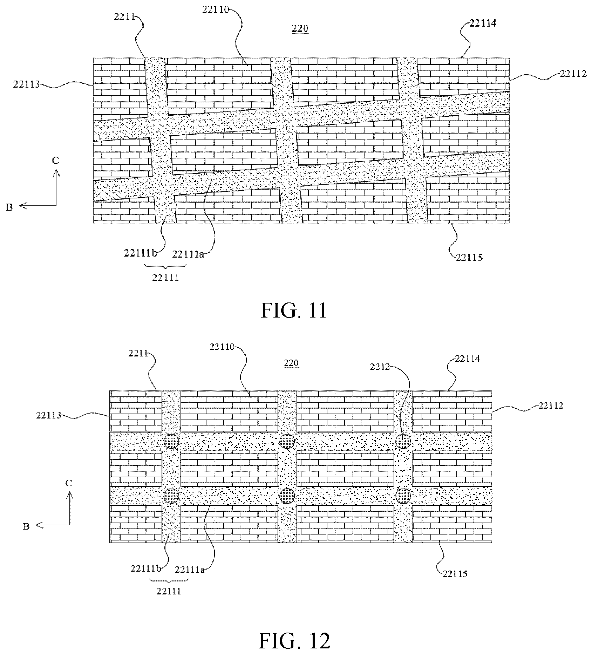

The first preset direction D may mean the length direction B of the foamed metal layer, or may mean the width direction C of the foamed metal layer. In other words, the fillers in the filled region 22111 may include only the fillers arranged continuously between two opposite sides in the width direction C of the foamed metal layer, as shown in FIG. 5, FIG. 6, and FIG. 9; or, the fillers in the filled region 22111 may include only the fillers arranged continuously between two opposite sides in the length direction B of the foamed metal layer, as shown in FIG. 7 and FIG. 8; or, the fillers in the filled region 22111 may include both the fillers arranged continuously between two opposite sides in the length direction B of the foamed metal layer and the fillers arranged continuously between two opposite sides in the width direction C of the foamed metal layer, as shown in FIG. 10 and FIG. 11.

The electrode assembly 22 typically assumes a jelly-roll structure or a stacked structure. Both the length direction B of the foamed metal layer and the width direction C of the foamed metal layer both mean the directions when the electrode plate 220 is spread out.

It is hereby noted that the continuous arrangement of the filler between the two sides of the foamed metal layer 2211 along the first preset direction D does not mean that the extension direction of the filler is the first preset direction D. The extension direction of the filler may be parallel to or at an angle to the first preset direction D, as shown in FIG. 9 and FIG. 11.

In addition, no other requirements are imposed on the arrangement of the filled region 22111 in the foamed metal layer 2211, and the number of filled regions may be one or more. When a plurality of filled regions 22111 are arranged, in terms of distribution uniformity, the plurality of filled regions 22111 may be distributed uniformly or non-uniformly; in terms of arrangement direction, any two filled regions 22111 may be spaced out along the thickness direction A of the foamed metal layer, or may be spaced out along a direction perpendicular to the thickness direction A of the foamed metal layer.

In the technical solution disclosed in the above embodiment of this application, a part of the foamed metal layer 2211 is configured as a filled region 22111 that is filled with a filler. The filler extends continuously from one edge to the other edge of the foamed metal layer 2211, and the two edges are arranged on two opposite sides along the first preset direction D. In this way, the foamed metal layer 2211 can better withstand a tensile force on both sides arranged opposite to each other during processing. The tensile strength of the electrode plate 220 is increased, thereby alleviating the problem that the electrode plate 220 is prone to be stressed and deformed during preparation of the electrode assembly 22, and in turn, alleviating the problem that the electrode assembly 22 is prone to deform.

Referring to FIG. 9, in some embodiments, according to the first aspect, a first example in the first aspect is put forward. In the first preset direction D, a dimension of the foamed metal layer 2211 is L1; and, in a second preset direction E, a dimension of the foamed metal layer 2211 is L2; and the second preset direction E is perpendicular to the first preset direction D and the thickness direction A of the foamed metal layer. An angle between an extension direction of the filler in the filled region 22111 and the first preset direction D is α, and satisfies 0° ≤ α ≤ arctan((0.5 × L2)/L1).

The electrode assembly 22 typically assumes a jelly-roll structure or a stacked structure. The dimensions of the foamed metal layer 2211 in the first preset direction D and the second preset direction E both mean the corresponding dimensions when the electrode plate 220 is spread out.

In this design, the angle between the extension direction of the filler and the first preset direction D is controlled to be a relatively small angle. In this way, the filler can effectively improve the tensile performance of the foamed metal layer 2211 along the first preset direction D, and in turn, effectively increase the tensile strength of the electrode plate 220.

In some embodiments, according to the first aspect or an example of this first aspect, a second example of the first aspect is put forward. A dimension of the filler in a single filled region 22111 in a second preset direction E is greater than or equal to 1 mm. The second preset direction E is perpendicular to the first preset direction D and the thickness direction A of the foamed metal layer.

Referring to FIG. 5, the dimension of the filler in a single filled region 22111 in the second preset direction E is the width of the filler, denoted as Ln.

The applicant hereof has noticed that, when the width of the filler is overly small, the dimension imposes a high requirement on the operation process, and is adverse to keeping continuity in the length direction. When the width of the filler is 0.8 mm, the formed filler may be interrupted in the extension direction. When applied to the electrode plate 220, the filler makes the electrode plate 220 be obviously more prone to tensile deformation than the filler with a width of 1 mm.

In this design, the dimension of the filler in the second preset direction E is controlled to be above a specified criterion to avoid deficient width of the filler and facilitate operation. In addition, this ensures good continuity of the filler in the first preset direction D, and enables the filler to effectively increase the tensile strength of the electrode plate 220.

Referring to FIG. 5, in some embodiments, according to any one of the first aspect or the first example to the second example of the first aspect, a third example of the first aspect is disclosed. A dimension of the filler in a single filled region 22111 in a second preset direction E is less than or equal to 4 mm, and the second preset direction E is perpendicular to the first preset direction D and the thickness direction A of the foamed metal layer.

As an example, the dimension of the filler in a single filled region 22111 in the second preset direction E may be, but is not limited to, any one of 1 mm, 1.2 mm, 1.4 mm, 1.5 mm, 1.6 mm, 1.8 mm, 2 mm, 2.2 mm, 2.5 mm, 3 mm, 3.5 mm, 4 mm, or a value falling within a range formed by any two thereof.

The applicant hereof has noticed that, because the pores in the filled region 22111 are filled with the filler, when the electrode plate 220 is used as a negative electrode plate 221 for depositing lithium metal and the like, the filled region 22111 is unable to provide pores for depositing lithium. Therefore, the lithium metal that is expected to be deposited in the filled region 22111 is richly concentrated on both sides in the width direction of the filler. If the width of the filler is too large, the amount of the lithium metal richly concentrated on both sides in the width direction of the filler may be excessive, thereby generating an excessive local expansion force on both sides in the width direction of the filler.

In this design, the dimension of the filler in the second preset direction E is controlled below a specified criterion to avoid excessive width of the filler. This can effectively prevent an excessive expansion force at a local position from being caused by excessive deposition of lithium metal on both sides of the filler or by other factors, and avoid deformation of the electrode assembly 22 caused by the excessive expansion force at the local position.

In some embodiments, according to any one of the first aspect or the first example to the third example of the first aspect, a fourth example of the first aspect is disclosed. In a second preset direction E, a dimension of the foamed metal layer 2211 is L2, a sum of dimensions of the fillers in the filled regions 22111 is L3, and an L3/L2 ratio is less than or equal to 10%. The second preset direction E is perpendicular to the first preset direction D and the thickness direction A of the foamed metal layer.

As an example, the value of the L3/L2 ratio may be, but is not limited to, any one of 3%, 4%, 5%, 6%, 7%, 8%, 9%, 10% or a value falling within a range formed by any two thereof.

When just a single filled region 22111 is created, in the second preset direction E, the sum L3 of the dimensions of the filler in the filled region 22111 is equal to the dimension Ln of the filler in the filled region 22111 of the single filler. When a plurality of filled regions 22111 are created, in the second preset direction E, the sum L3 of the dimensions of the fillers in the filled regions 22111 is the sum of the dimensions Ln of the fillers in the filled regions 22111 of all fillers.

In this design, the ratio of the sum of dimensions of the fillers in the second preset direction E to the dimension of the foamed metal layer 2211 in the second preset direction E is controlled below a specified criterion. In this way, the filler is ensured to effectively increase the tensile strength of the electrode plate 220, and leave a relatively large unfilled region 22110 in the foamed metal layer 2211 to accommodate lithium metal and the like, thereby helping to keep a relatively high energy density of the electrode assembly 22.

Referring to FIG. 5, according to the present invention, in a second preset direction E, a plurality of the filled regions 22111 are arranged. A dimension of the foamed metal layer 2211 is L2, a distance of the filler between two adjacent filled regions 22111 is L4, and an L4/L2 ratio is greater than or equal to 10%. The second preset direction E is perpendicular to the first preset direction D and the thickness direction A of the foamed metal layer.

In this design, the ratio of the distance between two adjacent fillers in the second preset direction E to the dimension of the foamed metal layer 2211 in the second preset direction E is controlled to be above a specified criterion. In this way, a specified distance is maintained between adjacent fillers, thereby facilitating uniform distribution of a plurality of fillers along the second preset direction E, and enabling the filler to more effectively increase the overall tensile strength of the electrode plate 220.

Referring to FIG. 5, in some embodiments, according to any one of the first aspect or the first example to the fifth example of the first aspect, a sixth example of the first aspect is disclosed. In a second preset direction E, a plurality of filled regions 22111 are arranged, and the fillers in the plurality of filled regions 22111 are distributed uniformly. The second preset direction E is perpendicular to the first preset direction D and the thickness direction A of the foamed metal layer.

In the second preset direction E, the fillers in the plurality of filled regions 22111 are distributed uniformly, which means that, in the second preset direction E, distances L4 between any two adjacent fillers are almost the same, and the distance between the filler located at the edge and the edge of the corresponding foamed metal layer 2211 is almost the same as L4. In other words, the dimensions of the unfilled regions 22110 on the two sides of any filler are almost the same.

With a view to uniform distribution of fillers, when a single filler is disposed, optionally, in the second preset direction E, the filler is located in the middle of the foamed metal layer 2211.

In this design, a plurality of fillers are distributed uniformly along the second preset direction E, thereby enabling the fillers to more effectively increase the overall tensile strength of the electrode plate 220.

In some embodiments, according to any one of the first aspect or the first example to the sixth example of the first aspect, a seventh example of the first aspect is disclosed. The foamed metal layer 2211 includes a first edge 22112 and a second edge 22113 that are arranged along a length direction B of the foamed metal layer as well as a third edge 22114 and a fourth edge 22115 that are arranged along a width direction C of the foamed metal layer; the filled region 22111 includes a first filled region 22111a in which the filler extends continuously from the first edge 22112 to the second edge 22113; and/or, the filled region 22111 includes a second filled region 22111b in which the filler extends continuously from the third edge 22114 to the fourth edge 22115.

The length direction B of the foamed metal layer corresponds to the long edge of the foamed metal layer 2211, and the width direction C of the foamed metal layer corresponds to the short edge of the foamed metal layer 2211. The length of the long edge of the foamed metal layer 2211 is greater than or equal to the length of the short edge of the foamed metal layer 2211.

The above design includes the following design manners. In the first design manner, the filled region 22111 includes a first filled region 22111a in which the filler extends continuously from the first edge 22112 to the second edge 22113, as shown in FIG. 5, FIG. 6, and FIG. 9. In the second design manner, the filled region 22111 includes a second filled region 22111b in which the filler extends continuously from the third edge 22114 to the fourth edge 22115, as shown in FIG. 7 and FIG. 8. In the third design manner, the filled region 22111 includes a first filled region 22111a in which the filler extends continuously from the first edge 22112 to the second edge 22113 as well as a second filled region 22111b in which the filler extends continuously from the third edge 22114 to the fourth edge 22115, as shown in FIG. 10 and FIG. 11.

In this design, the filled region includes a first filled region 22111a in which the filler extends continuously from the first edge 22112 to the second edge 22113, so that the filler can effectively improve the tensile performance of the foamed metal layer 2211 along the length direction. The filled region includes a second filled region 22111b in which the filler extends continuously from the third edge 22114 to the fourth edge 22115, so that the filler can effectively improve the tensile performance of the foamed metal layer 2211 along the width direction. When both the first filled region 22111a and the second filled region 22111b are configured, the fillers are distributed in the form of a lattice. In this way, the surroundings of the foamed metal layer 2211 can better withstand the tensile force generated during processing, thereby more effectively improving the overall tensile strength of the electrode plate 220.

Referring to FIG. 5, in some embodiments, according to the seventh example of the first aspect, an eighth example of the first aspect is disclosed. The filled region 22111 includes the first filled region 22111a in which the filler extends continuously from the first edge 22112 to the second edge 22113. In the width direction C of the foamed metal layer, a dimension of the foamed metal layer 2211 is L5, a sum of dimensions of the first filled region 22111a is L6, and an L6/L5 ratio is greater than or equal to 3%.

As an example, the value of the L6/L5 ratio may be, but is not limited to, any one of 3%, 4%, 5%, 6%, 7%, 8%, 9%, 10% or a value falling within a range formed by any two thereof.

The applicant hereof has noticed that, because the length of the long edge of the foamed metal layer 2211 is relatively large, the foamed metal layer 2211 is more prone to tensile deformation in the length direction. Moreover, when the electrode assembly 22 assumes a j elly-roll structure, the long-edge direction of the foamed metal layer 2211 generally corresponds to the winding direction of the j elly-roll structure, and the foamed metal layer 2211 is subjected to a relatively large tensile force in the winding direction during the winding. Therefore, when the filled region includes the first filled region 22111a in which the filler extends continuously from the first edge 22112 to the second edge 22113, the filler needs to be capable of providing relatively large tensile strength for the electrode plate 220.

In this design, the filled region includes the first filled region 22111a in which the filler extends continuously from the first edge 22112 to the second edge 22113, and the ratio of the sum of dimensions of the fillers in the width direction C of the foamed metal layer to the dimension of the foamed metal layer 2211 in the width direction C of the foamed metal layer is controlled to be above a specified criterion, so that the filler is capable of providing relatively large tensile strength for the electrode plate 220. In this way, the filler endows the foamed metal layer 2211 with enough tensile strength along the length direction to withstand the tension generated during processing.

In some embodiments, according to any one of the first aspect or the first example to the eighth example of the first aspect, a ninth example of the first aspect is disclosed. The electrode plate 220 is an electrode plate 220 of an electrode assembly 22 that assumes a jelly-roll structure, and the first preset direction D includes a winding direction of the jelly-roll structure.

The first preset direction D includes the winding direction of the winding structure, which means that, the foamed metal layer 2211 includes a filled region 22111 in which the filler extends continuously between two sides in the winding direction.

In a rewind-and-unwind process, a deflection correction force exists in the height direction of the winding structure, in some embodiments, the foamed metal layer 2211 may further include a filled region 22111 in which the filler extends continuously between two sides in the height direction of the winding structure.

In this design, the filler extends continuously along the winding direction of the j elly-roll structure, so that the electrode plate 220 can properly withstand the tension generated in the winding direction during a winding process, thereby alleviating the problem that the jelly-roll electrode assembly 22 is prone to deform.

In some embodiments, according to any one of the first aspect or the first example to the ninth example of the first aspect, a tenth example of the first aspect is disclosed. The filler is a polymer. Optionally, the filler is a rubber material. Optionally, the rubber material includes one or more of natural rubber, styrene-butadiene rubber, high-cis polybutadiene rubber, isoprene rubber, neoprene rubber, butyl rubber, nitrile butadiene rubber, or silicone rubber.

In this design, the polymer is selected as a filler. By virtue of good mechanical strength, the polymer enables the filler to better increase the tensile strength of the electrode plate 220.

Referring to FIG. 6, according to the invention, in the thickness direction A of the foamed metal layer, a dimension of the foamed metal layer 2211 is H1, and a thickness of the filler in a single filled region 22111 is H2, satisfying: H2/H1 = (0.95 to 1.05).

For example, the H2/H1 ratio may be, but is not limited to, any one of 0.95, 0.96, 0.97, 0.98, 0.99, 1, 1.05, or a value falling within a range formed by any two thereof.

In this design, the thickness of the filler in a single filled region 22111 is close to or equal to the thickness of the foamed metal layer 2211. On the one hand, the filler is endowed with higher mechanical strength to increase the tensile strength of the electrode plate 220. On the other hand, the filler can effectively support the adjacent stacked structures in the electrode assembly, thereby alleviating the problem that the electrode plate 220 is deformed by the pressure received in the stacking direction.

In some embodiments, according to the tenth example of the first aspect, a twelfth example of the first aspect is disclosed. In the thickness direction A of the foamed metal layer, two opposite surfaces of the filler cover two opposite surfaces of the foamed metal layer 2211 respectively.

The two opposite surfaces of the filler cover the two opposite surfaces of the foamed metal layer 2211 respectively, which means that the two surfaces of the filled region 22111 in the thickness direction A of the foamed metal layer are the surfaces of the filler. As an example, in the thickness direction A of the foamed metal layer, the thickness of the filler is almost the same as the thickness of the foamed metal layer 2211, thereby minimizing the coverage thickness of the filler on the foamed metal layer 2211 on the basis of ensuring that the filler covers the foamed metal layer 2211.

In this design, two surfaces of the filler in the thickness direction cover the surfaces of the foamed metal layer 2211 respectively. On the one hand, because a single filled region 22111 is relatively thick, the filler is endowed with higher mechanical strength to increase the tensile strength of the electrode plate 220, and at the same time, the filler is enabled to effectively support the adjacent stacked structures in the electrode assembly. On the other hand, when the filler is a polymer, due to the insulating properties of the polymer, the filler can prevent the lithium metal and the like from being deposited on the surface of the filler, and therefore, from increasing the expansion force at a local position.

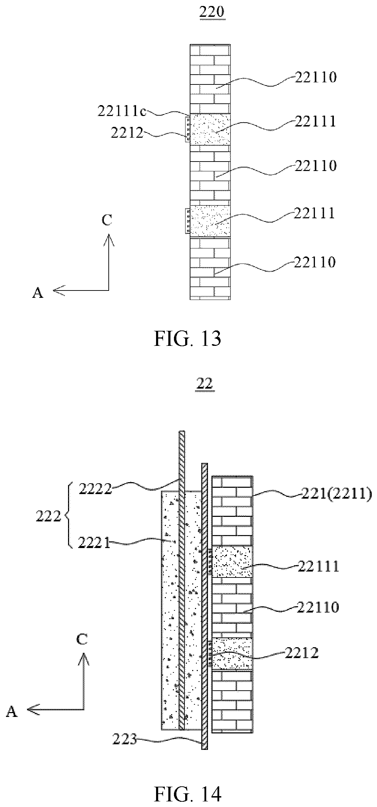

Referring to 12 to FIG. 14, in some embodiments, according to the eleventh or twelfth example of the first aspect, a thirteenth example of the first aspect is disclosed. The filler includes a filling surface 22111c arranged along the thickness direction A of the foamed metal layer. The filling surface 22111c includes a bonding portion 2212. The bonding portion 2212 is configured to bond the electrode plate 220 and a separator 223 together.

The bonding portion 2212 is an adhesive structure. Because the electrode assembly 22 is usually in an electrolyte solution environment, the material of the bonding portion 2212 may be an adhesive material that is relatively stable in the electrolyte solution, depending on actual requirements.

The bonding portion 2212 is configured to bond the electrode plate 220 and the separator 223 together. Therefore, at least the surface of the bonding portion 2212 protrudes beyond the surface of the foamed metal layer 2211. For example, when the thickness of the filler is less than the thickness of the foamed metal layer 2211, the filling surface 22111c is lower than the surface of the foamed metal layer 2211. In this case, a part of the bonding portion 2212 is located inside the foamed metal layer 2211, and another part of the bonding portion protrudes beyond the surface of the foamed metal layer 2211. When the thickness of the filler is greater than or equal to the thickness of the foamed metal layer 2211, the filling surface 22111c is not lower than the surface of the foamed metal layer 2211. In this case, all of the bonding portion 2212 protrudes beyond the surface of the foamed metal layer 2211.

The arrangement manner of the bonding portion 2212 on the filling surface 22111c is not limited. In some embodiments, a plurality of bonding portions 2212 are disposed and in the shape of bumps. The plurality of bonding portions 2212 are distributed in the form of a matrix. In an embodiment in which the filled region 22111 includes a first filled region 22111a and a second filled region 22111b, as an example, each bonding portion 2212 is located on a surface at an intersection between the filler in the first filled region 22111a and the filler in the second filled region 22111b.

In this design, the filling surface 22111c includes a bonding portion 2212 configured to bond the electrode plate 220 and the separator 223 together, thereby effectively preventing the electrode plate 220 from being dislocated in the electrode assembly 22. By controlling the size of the bonding portion 2212 to be above a specific criterion, this design facilitates operation and is conducive to bonding the electrode plate 220 and the separator 223 more reliably. Therefore, controlling the dimension of the filler in the second preset direction E to be above a specified criterion is also conducive to configuring a bonding portion 2212 of an appropriate size.

In some embodiments, according to the thirteenth example of the first aspect, a fourteenth example of the first aspect is disclosed. The material of the bonding portion 2212 includes an adhesive. Optionally, the material of the bonding portion 2212 includes one or more of polyvinylidene fluoride or polymethyl methacrylate.

In this design, the adhesive is selected to form the bonding portion 2212, thereby being easy to operate and ensuring that the bonding portion 2212 can effectively bond the electrode plate 220 and the separator 223 together. Furthermore, polyvinylidene fluoride and polymethyl methacrylate are selected as the adhesive, so that the bonding portion 2212 is stable in the electrolyte solution, and the bonding portion 2212 can serve to avoid dislocation of the electrode plate 220 in a longer period.

In some embodiments, according to any one of the first aspect or the first example to the fourteenth example of the first aspect, a fifth example of the first aspect is disclosed. The electrode plate 220 is a negative electrode plate 221.

The foamed metal layer 2211 is used as a substrate of the negative electrode plate 221. As an example, neither of the surfaces of the negative electrode plate distributed along the thickness direction A of the foamed metal layer is coated with a negative active material.

Referring to FIG. 14, as an example, in the electrode assembly 22 that includes the negative electrode plate 221, a positive electrode plate 222 includes a current collector 2222 of the positive electrode plate and a positive active material layer 2221. Both sides of the current collector 2222 of the positive electrode plate in the thickness direction are coated with a positive active material layer 2221. The separator 223 is located between the positive electrode plate 222 and the negative electrode plate 221.

In this design, the electrode plate 220 is configured as a negative electrode plate 221, and the unfilled region 22110 can provide space for depositing lithium metal and the like, thereby helping the electrode assembly 22 maintain a relatively high energy density.

Referring to FIG. 14, in some embodiments, according to the fifteenth example of the first aspect, a sixteenth example of the first aspect is disclosed. Along the thickness direction A of the foamed metal layer, a projection of the filler is configured to at least partially overlap a projection of a coated region of a positive electrode plate.

The coated region of the positive electrode plate means a region coated with the positive active material layer 2221 on the positive electrode plate 222. Along the thickness direction A of the foamed metal layer, the projection of the filled region 22111 is configured to at least partially overlap the projection of the coated region of the positive electrode plate, which means that, in the electrode assembly 22, along the thickness direction A of the foamed metal layer A, the projection of the filled region 22111 partially or fully overlaps the projection of the coated region of the positive electrode plate.

In this design, the filler is configured to at least partially overlap the coated region of the positive electrode plate. When the negative electrode plate 221 and the positive electrode plate 222 are stacked to form an electrode assembly 22, the negative electrode plate 221 can better withstand the pressure from the positive electrode plate 222, thereby alleviating the compressive deformation of the negative electrode plate 221, and in turn, alleviating the problem that the electrode assembly 22 is prone to deform.

According to a second aspect, this application provides an electrode assembly 22. The electrode assembly includes a separator 223 and the electrode plate 220 disclosed in the foregoing embodiment.

The electrode plates 220 is a negative electrode plate 221 and/or a positive electrode plate 222.

According to a third aspect, this application provides a battery cell 20. The battery cell includes a shell 21 and the electrode assembly 22 disclosed in the foregoing embodiment. The electrode assembly 22 is accommodated in the shell 21.

According to a fourth aspect, this application provides a battery 100, including a box 10 and a plurality of battery cells 20 disclosed in the foregoing embodiment. The plurality of battery cells 20 are accommodated in the box 10.

According to a fifth aspect, this application provides an electrical device. The electrical device includes the battery cell 20 disclosed in the foregoing embodiment.

According to a sixth aspect, this application provides an electrode plate 220 manufacturing method, including: filling pores in a partial region of a foamed metal layer 2211 with a filler to form a filled region 22111, where the filler extends continuously from one edge to another edge of the foamed metal layer 2211, the two edges being arranged on two opposite sides along a first preset direction D; and the first preset direction D is perpendicular to a thickness direction A of the foamed metal layer.

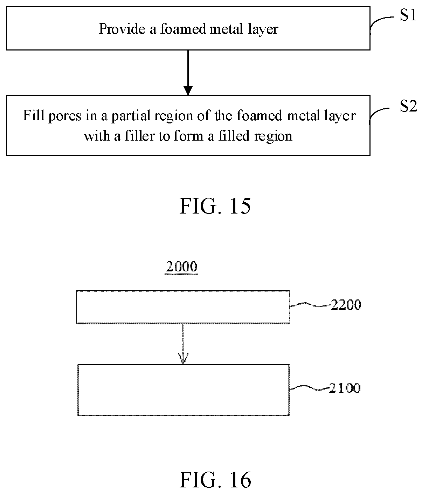

Referring to FIG. 15, a process flow of the electrode plate 220 manufacturing method is as follows:
S1: Providing a foamed metal layer 2211.
S2. Filling pores in a partial region of the foamed metal layer 2211 with a filler to form a filled region 22111.

In the technical solutions of some embodiments of this application, the electrode plate 220 disclosed in the foregoing embodiment can be manufactured to alleviate the problem that the electrode assembly 22 is prone to deform.

Referring to FIG. 16, according to a seventh aspect, this application provides a piece of electrode plate manufacturing equipment 2000, including a providing apparatus 2100 and a filling apparatus 2200. The providing apparatus 2100 is configured to provide a foamed metal layer 2211. The filling apparatus 2200 is configured to fill pores in a partial region of the foamed metal layer 2211 with a filler to form a filled region 22111. The filler extends continuously from one edge to another edge of the foamed metal layer 2211, the two edges being arranged on two opposite sides along a first preset direction D. The first preset direction D is perpendicular to a thickness direction A of the foamed metal layer.

In the technical solutions of some embodiments of this application, the electrode plate 220 disclosed in the foregoing embodiment can be manufactured to alleviate the problem that the electrode assembly 22 is prone to deform.

Referring to FIG. 12 to FIG. 14, an embodiment of this application provides an electrode plate 220 that uses a foamed metal layer 2211 as a substrate. A part of the foamed metal layer 2211 is a filled region 22111. Pores of the filled region 22111 are filled with a filler. The filler is a polymer. The filled region 22111 includes a first filled region 22111a in which the filler extends continuously from the first edge 22112 to the second edge 22113 as well as a second filled region 22111b in which the filler extends continuously from the third edge 22114 to the fourth edge 22115. The filler in the first filled region 22111a is parallel to a length direction B of the foamed metal layer, and the filler in the second filled region 22111b is parallel to a width direction C of the foamed metal layer. In the thickness direction A of the foamed metal layer, two opposite surfaces of the filler cover two opposite surfaces of the foamed metal layer 2211 respectively. A bonding portion 2212 is disposed on the filling surface 22111c of the filler. A plurality of bonding portions 2212 are disposed and in the shape of bumps. The plurality of bonding portions 2212 are distributed in the form of a matrix. Each bonding portion 2212 is located on a surface at an intersection between the filler in the first filled region 22111a and the filler in the second filled region 22111b.

### Test Examples

An electrode plate 220 was prepared with reference to FIG. 10:

A foamed metal layer 2211 with a porosity of 90% was used as a substrate of the electrode piece 220. The dimension of the substrate in the length direction B of the foamed metal layer was 100 mm, and the dimension of the substrate in the width direction C of the foamed metal layer was 20 mm.

The pores in a partial region were filled with nitrile butadiene rubber to form a filled region 22111. Two opposite surfaces of the filler covered the two opposite surfaces of the foamed metal layer 2211 respectively. The filled region included a first filled region 22111a in which the filler extended continuously from the first edge 22112 to the second edge 22113 as well as a second filled region 22111b in which the filler extended continuously from the third edge 22114 to the fourth edge 22115. The filler in the first filled region 22111a was parallel to the length direction B of the foamed metal layer, and the filler in the second filled region 22111b was parallel to the width direction C of the foamed metal layer.

In each test example, test conditions remain unchanged except that at least one of the following items is changed: the width Ln of the filler in a single filled region 22111, the number n1 of fillers in the first filled region 22111a, or the number n2 of fillers in the second filled region 22111b. In the second preset direction E, the fillers in the filled regions 22111 were distributed uniformly, which means that, in the second preset direction E, the dimensions of the unfilled regions 22110 on two sides of each filler were almost the same.

Test of the tensile strength of the electrode plate 220:

A tensile force of 200 N was evenly applied to both sides in the length direction B of the foamed metal layer. Measurement was performed on the deformation of the tensioned electrode plate 220.

Table 1 shows the arrangement of fillers and the deformation of the tensioned electrode plate 220 in each test example.

**Table 1 Arrangement of fillers and deformation of tensioned electrode plate 220**

| | Arrangement of filler | | | | Deformation caused by tension | |
|---|---|---|---|---|---|---|
| | Ln (mm) | n1 (piece) | L6/L5 (%) | n2 (piece) | Length after tensioning in tensile direction (mm) | Elongation rate in tensile direction (%) |
| Test Example 1 | 1 | 2 | 2 | 5 | 107 | 107 |
| Test Example 2 | 0.8 | 3 | 2.4 | 5 | 105 | 105 |
| Test Example 3 | 1 | 3 | 3 | 5 | 100.8 | 100.8 |
| Test Example 4 | 1.2 | 3 | 3.6 | 5 | 100.1 | 100.1 |
| Test Example 5 | 1.5 | 2 | 3 | 5 | 100.6 | 100.6 |
| Test Example 6 | 1 | 4 | 4 | 5 | 100 | 100 |
| Test Example 7 | 2 | 5 | 10 | 5 | 100 | 100 |
| Test Example 8 | 4 | 2 | 8 | 5 | 100 | 100 |
| Test Example 9 | 0 | 0 | 0 | 0 | / | Snapped off |

Referring to Table 1:
As can be seen from the comparison between Test Examples 1 to 8 and Test Example 9, the filler can increase the tensile strength of the electrode plate 220 make the electrode plate 220 not prone to snap off.

As can be seen from the comparison between Test Examples 1, 3, and 6, with the increase of the number of fillers, the degree of deformation of the tensioned electrode plate 220 is lower, indicating that the tensile strength of the electrode plate 220 is increased.

As can be seen from the comparison between Test Examples 2 to 4, with the increase of the width of a single filler, the degree of deformation of the tensioned electrode plate 220 is lower, indicating that the tensile strength of the electrode plate 220 is increased. When the width of a single filler increases from 0.8 mm to 1 mm, the degree of deformation of the tensioned electrode plate 220 is significantly reduced.

As can be seen from the comparison between Test Examples 1 to 2 and Test Examples 3 to 7, with the increase of the percentage of the sum of widths of fillers, the degree of deformation of the tensioned electrode plate 220 is lower, indicating that the tensile strength of the electrode plate 220 is increased. When the percentage of the sum of widths of the fillers reaches 3% or higher, the electrode plate 220 scarcely deforms after being tensioned.

Finally, it is hereby noted that the foregoing embodiments are merely intended to describe the technical solutions of this application but not to limit this application. This application is not limited to the specific embodiments disclosed herein, but includes all technical solutions falling within the scope of the claims.

## Claims

1. A battery cell (20) comprising a shell (21) and an electrode assembly (22), wherein the electrode assembly (22) is accommodated in the shell (21), the electrode assembly (22) comprising a separator (223) and an electrode plate, wherein the electrode plate comprises a foamed metal layer (2211);
a part of the foamed metal layer (2211) is a filled region, and pores of the filled region are filled with a filler; the remaining part of the foamed metal layer (2211) is an unfilled region (22110) and pores in the unfilled region (22110) are used for depositing lithium metal;
wherein the filler is a polymer;
the filler extends continuously from one edge to another edge of the foamed metal layer (2211), the two edges being arranged on two opposite sides along a first preset direction (D); and
the first preset direction (D) is perpendicular to a thickness direction (A) of the foamed metal layer (2211);
wherein, in the thickness direction of the foamed metal layer (2211), a dimension of the foamed metal layer (2211) is H1, and a thickness of the filler in a single filled region is H2, satisfying: H2/H2 = (0.95 to 1.05);
wherein, in a second preset direction (E), a plurality of the filled regions are arranged, a dimension of the foamed metal layer (2211), in said second preset direction (E), is L2, a distance of the filler between two adjacent filled regions, in said second preset direction (E), is L4, and an L4/L2 ratio is greater than or equal to 10%; and the second preset direction (E) is perpendicular to the first preset direction (D) and the thickness direction (A) of the foamed metal layer (2211).

2. The battery cell (20) according to claim 1, wherein, in the first preset direction (D), a dimension of the foamed metal layer (2211) is L1; and,
an angle between an extension direction of the filler in the filled region and the first preset direction (D) is α, and satisfies 0° ≤ α ≤ arctan((0.5 × L2)/L1).

3. The battery cell (20) according to claim 1 or 2, wherein a dimension of the filler in a single filled region in the second preset direction (E) is greater than or equal to 1 mm.

4. The battery cell (20) according to any one of claims 1 to 3, wherein a dimension of the filler in a single filled region in the second preset direction (E) is less than or equal to 4 mm, and/or, wherein, in the second preset direction (E), a dimension of the foamed metal layer (2211) is L2, a sum of dimensions of the fillers in the filled regions is L3, and an L3/L2 ratio is less than or equal to 10%.

5. The battery cell (20) according to any one of claims 1 to 4 wherein, the fillers in the plurality of filled regions are distributed uniformly.

6. The battery cell (20) according to any one of claims 1 to 5, wherein the foamed metal layer (2211) comprises a first edge (22112) and a second edge (22113) that are arranged along a length direction (B) of the foamed metal layer (2211) as well as a third edge (22114) and a fourth edge (22115) that are arranged along a width direction (C) of the foamed metal layer (2211);
the filled region comprises a first filled region (22111a) in which the filler extends continuously from the first edge (22112) to the second edge (22113);
and/or,
the filled region comprises a second filled region (22111b) in which the filler extends continuously from the third edge (22114) to the fourth edge (22115), optionally, wherein the filled region comprises the first filled region (22111a) in which the filler extends continuously from the first edge (22112) to the second edge (22113); and
in the width direction of the foamed metal layer (2211), a dimension of the foamed metal layer (2211) is L5, a sum of dimensions of the first filled region (22111a) is L6, and an L6/L5 ratio is greater than or equal to 3%.

7. The battery cell (20) according to any one of claims 1 to 6, wherein the electrode plate is an electrode plate of an electrode assembly (22) that assumes a jelly-roll structure, and the first preset direction (D) comprises a winding direction of the jelly-roll structure,
optionally, the filler is a rubber material;
optionally, the rubber material comprises one or more of natural rubber, styrene-butadiene rubber, high-cis polybutadiene rubber, isoprene rubber, neoprene rubber, butyl rubber, nitrile butadiene rubber, or silicone rubber.

8. The battery cell (20) according to claim 7, wherein, in the thickness direction of the foamed metal layer (2211), two opposite surfaces of the filler cover two opposite surfaces of the foamed metal layer (2211) respectively.

9. The battery cell (20) according to any preceding claim, wherein the filler comprises a filling surface (22111c) arranged along the thickness direction of the foamed metal layer (2211), the filling surface (22111c) comprises a bonding portion (2212), and the bonding portion (2212) is configured to bond the electrode plate and a separator (223) together, optionally, wherein a material of the bonding portion (2212) comprises an adhesive; and
optionally, the material of the bonding portion (2212) comprises one or more of polyvinylidene fluoride or polymethyl methacrylate.

10. The battery cell (20) according to any one of claims 1 to 7, wherein the electrode plate is a negative electrode plate (221), optionally, wherein, along the thickness direction of the foamed metal layer (2211), a projection of the filler is configured to at least partially overlap a projection of a coated region of a positive electrode plate (222).

11. A battery, comprising a box and a plurality of battery cells according to any of claims 1 to 10, wherein
the plurality of battery cells (20) are accommodated in the box.

12. An electrical device, comprising the battery cell according to any of claims 1 to 10.

13. An electrode plate manufacturing method, comprising:
filling pores in a partial region of a foamed metal layer (2211) with a filler to form a filled region, the remaining part of the foamed metal layer (2211) is an unfilled region (22110) and pores in the unfilled region (22110) are used for depositing lithium metal;
wherein the filler is a polymer;
wherein the filler extends continuously from one edge to another edge of the foamed metal layer (2211), the two edges being arranged on two opposite sides along a first preset direction (D); and
the first preset direction (D) is perpendicular to a thickness direction (A) of the foamed metal layer (2211); wherein, in the thickness direction (A) of the foamed metal layer (2211), a dimension of the foamed metal layer (2211) is H1, and a thickness of the filler in a single filled region is H2, satisfying: H2/H2 = (0.95 to 1.05);
wherein, in a second preset direction (E), a plurality of the filled regions are arranged, a dimension of the foamed metal layer (2211), in said second preset direction (E), is L2, a distance of the filler between two adjacent filled regions, in said second preset direction (E), is L4, and an L4/L2 ratio is greater than or equal to 10%; and the second preset direction (E) is perpendicular to the first preset direction (D) and the thickness direction (A) of the foamed metal layer (2211).

14. An electrode plate manufacturing equipment (2000), comprising:
a providing apparatus (2100), configured to provide a foamed metal layer (2211); and
a filling apparatus (2200), configured to fill pores in a partial region of the foamed metal layer (2211) with a filler to form a filled region, the remaining part of the foamed metal layer (2211) is an unfilled region (22110) and pores in the unfilled region (22110) are used for depositing lithium metal;
wherein the filler is a polymer;
wherein the filling apparatus (2200) is configured to fill the pores in such a way that the filler extends continuously from one edge to another edge of the foamed metal layer (2211), the two edges being arranged on two opposite sides along a first preset direction (D); and
the first preset direction (D) is perpendicular to a thickness direction (A) of the foamed metal layer (2211);
wherein, in the thickness direction (A) of the foamed metal layer (2211), a dimension of the foamed metal layer (2211) is H1, and a thickness of the filler in a single filled region is H2, satisfying: H2/H2 = (0.95 to 1.05);
wherein, in a second preset direction (E), a plurality of the filled regions are arranged, a dimension of the foamed metal layer (2211), in said second preset direction (E), is L2, a distance of the filler between two adjacent filled regions, in said second preset direction (E), is L4, and an L4/L2 ratio is greater than or equal to 10%; and the second preset direction (E) is perpendicular to the first preset direction (D) and the thickness direction (A) of the foamed metal layer (2211).

## Patentansprüche

1. Batteriezelle (20), umfassend eine Hülle (21) und eine Elektrodenanordnung (22), wobei die Elektrodenanordnung (22) in der Hülle (21) untergebracht ist, wobei die Elektrodenanordnung (22) einen Separator (223) und eine Elektrodenplatte umfasst, wobei die Elektrodenplatte eine geschäumte Metallschicht (2211) umfasst;
ein Teil der geschäumten Metallschicht (2211) eine gefüllte Region ist, und Poren der gefüllten Region mit einem Füllstoff gefüllt sind; der verbleibende Teil der geschäumten Metallschicht (2211) eine ungefüllte Region (22110) ist und Poren in der ungefüllten Region (22110) zur Ablagerung von Lithiummetall verwendet werden;
wobei der Füllstoff ein Polymer ist;
sich der Füllstoff kontinuierlich von einer Kante zu einer anderen Kante der geschäumten Metallschicht (2211) erstreckt, wobei die beiden Kanten auf zwei gegenüberliegenden Seiten entlang einer ersten vorgegebenen Richtung (D) angeordnet sind; und
die erste vorgegebene Richtung (D) senkrecht zu einer Dickenrichtung (A) der geschäumten Metallschicht (2211) ist;
wobei in der Dickenrichtung der geschäumten Metallschicht (2211) eine Abmessung der geschäumten Metallschicht (2211) H1 ist und eine Dicke des Füllstoffs in einer einzelnen gefüllten Region H2 ist, wobei Folgendes erfüllt ist: H2/H2 = (0,95 bis 1,05);
wobei in einer zweiten vorgegebenen Richtung (E) eine Vielzahl von den gefüllten Regionen angeordnet sind, eine Abmessung der geschäumten Metallschicht (2211) in der zweiten vorgegebenen Richtung (E) L2 ist, eine Entfernung des Füllstoffs zwischen zwei angrenzenden gefüllten Regionen in der zweiten vorgegebenen Richtung (E) L4 ist und ein Verhältnis L4/L2 größer oder gleich 10 % ist; und die zweite vorgegebene Richtung (E) senkrecht zur ersten vorgegebenen Richtung (D) und zur Dickenrichtung (A) der geschäumten Metallschicht (2211) ist.

2. Batteriezelle (20) nach Anspruch 1, wobei in der ersten vorgegebenen Richtung (D) eine Abmessung der geschäumten Metallschicht (2211) L1 ist; und
ein Winkel zwischen einer Ausdehnungsrichtung des Füllstoffs in der gefüllten Region und der ersten vorgegebenen Richtung (D) α beträgt und 0° ≤ α ≤ arctan((0,5 × L2)/L1) erfüllt.

3. Batteriezelle (20) nach Anspruch 1 oder 2, wobei eine Abmessung des Füllstoffs in einer einzelnen gefüllten Region in der zweiten vorgegebenen Richtung (E) größer oder gleich 1 mm ist.

4. Batteriezelle (20) nach einem der Ansprüche 1 bis 3, wobei eine Abmessung des Füllstoffs in einer einzelnen gefüllten Region in der zweiten vorgegebenen Richtung (E) kleiner oder gleich 4 mm ist, und/oder wobei in der zweiten vorgegebenen Richtung (E) eine Abmessung der geschäumten Metallschicht (2211) L2 ist, eine Summe von Abmessungen der Füllstoffe in den gefüllten Regionen L3 ist und ein Verhältnis L3/L2 kleiner oder gleich 10 % ist.

5. Batteriezelle (20) nach einem der Ansprüche 1 bis 4, wobei die Füllstoffe in der Vielzahl von gefüllten Regionen gleichmäßig verteilt sind.

6. Batteriezelle (20) nach einem der Ansprüche 1 bis 5, wobei die geschäumte Metallschicht (2211) eine erste Kante (22112) und eine zweite Kante (22113), die entlang einer Längsrichtung (B) der geschäumten Metallschicht (2211) angeordnet sind, sowie eine dritte Kante (22114) und eine vierte Kante (22115), die entlang einer Breitenrichtung (C) der geschäumten Metallschicht (2211) angeordnet sind, umfasst;
die gefüllte Region eine erste gefüllte Region (22111a) umfasst, in der sich der Füllstoff kontinuierlich von der ersten Kante (22112) bis zur zweiten Kante (22113) erstreckt;
und/oder,
die gefüllte Region eine zweite gefüllte Region (22111b) umfasst, in der sich der Füllstoff kontinuierlich von der dritten Kante (22114) bis zur vierten Kante (22115) erstreckt, wobei die gefüllte Region optional die erste gefüllte Region (22111a) umfasst, wobei sich der Füllstoff kontinuierlich von der ersten Kante (22112) bis zur zweiten Kante (22113) erstreckt; und
in der Breitenrichtung der geschäumten Metallschicht (2211) eine Abmessung der geschäumten Metallschicht (2211) L5 ist, die Summe von Abmessungen der ersten gefüllten Region (22111a) L6 ist und ein Verhältnis L6/L5 größer oder gleich 3 % ist.

7. Batteriezelle (20) nach einem der Ansprüche 1 bis 6, wobei die Elektrodenplatte eine Elektrodenplatte einer Elektrodenanordnung (22) ist, die eine Jelly-Roll-Struktur annimmt, und die erste voreingestellte Richtung (D) eine Wickelrichtung der Jelly-Roll-Struktur umfasst,
optional der Füllstoff ein Gummimaterial ist;
optional das Gummimaterial eines oder mehrere von Naturkautschuk, Styrol-Butadien-Kautschuk, Hoch-cis-Polybutadien-Kautschuk, Isopren-Kautschuk, Neopren-Kautschuk, Butylkautschuk, Nitril-Butadien-Kautschuk oder Silikonkautschuk umfasst.

8. Batteriezelle (20) nach Anspruch 7, wobei in der Dickenrichtung der geschäumten Metallschicht (2211) zwei gegenüberliegende Oberflächen des Füllstoffs jeweils zwei gegenüberliegende Oberflächen der geschäumten Metallschicht (2211) bedecken.

9. Batteriezelle (20) nach einem der vorstehenden Ansprüche, wobei der Füllstoff eine Fülloberfläche (22111c) umfasst, die entlang der Dickenrichtung der geschäumten Metallschicht (2211) angeordnet ist, wobei die Fülloberfläche (22111c) einen Verbindungsabschnitt (2212) umfasst, und der Verbindungsabschnitt (2212) konfiguriert ist, um die Elektrodenplatte und einen Separator (223) miteinander zu verbinden, wobei optional das Material des Verbindungsabschnitts (2212) einen Klebstoff umfasst; und
optional das Material des Verbindungsabschnitts (2212) eines oder mehrere von Polyvinylidenfluorid oder Polymethylmethacrylat umfasst.

10. Batteriezelle (20) nach einem der Ansprüche 1 bis 7, wobei die Elektrodenplatte eine negative Elektrodenplatte (221) ist, optional wobei entlang der Dickenrichtung der geschäumten Metallschicht (2211) ein Vorsprung des Füllstoffs konfiguriert ist, um einen Vorsprung einer beschichteten Region einer positiven Elektrodenplatte (222) mindestens teilweise zu überlappen.

11. Batterie, umfassend ein Gehäuse und eine Vielzahl von Batteriezellen nach einem der Ansprüche 1 bis 10, wobei
die Vielzahl von Batteriezellen (20) in dem Gehäuse untergebracht sind.

12. Elektrische Vorrichtung, umfassend die Batterie nach einem der Ansprüche 1 bis 10.

13. Elektrodenplattenherstellungsverfahren, umfassend:
Füllen von Poren in einer Teilregion einer geschäumten Metallschicht (2211) mit einem Füllstoff, um eine gefüllte Region zu bilden, wobei der verbleibende Teil der geschäumten Metallschicht (2211) eine ungefüllte Region (22110) ist und Poren in der ungefüllten Region (22110) zur Ablagerung von Lithiummetall verwendet werden;
wobei der Füllstoff ein Polymer ist;
wobei sich der Füllstoff kontinuierlich von einer Kante zu einer anderen Kante der geschäumten Metallschicht (2211) erstreckt, wobei die beiden Kanten auf zwei gegenüberliegenden Seiten entlang einer ersten vorgegebenen Richtung (D) angeordnet sind; und
die erste vorgegebene Richtung (D) senkrecht zu einer Dickenrichtung (A) der geschäumten Metallschicht (2211) ist; wobei in der Dickenrichtung (A) der geschäumten Metallschicht (2211) eine Abmessung der geschäumten Metallschicht (2211) H1 ist und eine Dicke des Füllstoffs in einer einzelnen gefüllten Region H2 ist, wobei Folgendes erfüllt ist: H2/H2 = (0,95 bis 1,05);
wobei in einer zweiten vorgegebenen Richtung (E) eine Vielzahl von den gefüllten Regionen angeordnet sind, eine Abmessung der geschäumten Metallschicht (2211) in der zweiten vorgegebenen Richtung (E) L2 ist, eine Entfernung des Füllstoffs zwischen zwei angrenzenden gefüllten Regionen in der zweiten vorgegebenen Richtung (E) L4 ist und ein Verhältnis L4/L2 größer oder gleich 10 % ist; und die zweite vorgegebene Richtung (E) senkrecht zur ersten vorgegebenen Richtung (D) und zur Dickenrichtung (A) der geschäumten Metallschicht (2211) ist.

14. Elektrodenplattenherstellungsausrüstung (2000), umfassend:
eine Bereitstellungseinrichtung (2100), die konfiguriert ist, um eine geschäumte Metallschicht (2211) bereitzustellen; und
eine Fülleinrichtung (2200), die konfiguriert ist, um Poren in einer Teilregion der geschäumten Metallschicht (2211) mit einem Füllstoff zu füllen, um eine gefüllte Region zu bilden, wobei der verbleibende Teil der geschäumten Metallschicht (2211) eine ungefüllte Region (22110) ist und Poren in der ungefüllten Region (22110) zur Ablagerung von Lithiummetall verwendet werden;
wobei der Füllstoff ein Polymer ist;
wobei die Fülleinrichtung (2200) konfiguriert ist, um die Poren so zu füllen, dass sich der Füllstoff kontinuierlich von einer Kante zu einer anderen Kante der geschäumten Metallschicht (2211) erstreckt, wobei die beiden Kanten auf zwei gegenüberliegenden Seiten entlang einer ersten vorgegebenen Richtung (D) angeordnet sind; und
die erste vorgegebene Richtung (D) senkrecht zu einer Dickenrichtung (A) der geschäumten Metallschicht (2211) ist;
wobei in der Dickenrichtung (A) der geschäumten Metallschicht (2211) eine Abmessung der geschäumten Metallschicht (2211) H1 ist und eine Dicke des Füllstoffs in einer einzelnen gefüllten Region H2 ist, wobei Folgendes erfüllt ist: H2/H2 = (0,95 bis 1,05);
wobei in einer zweiten vorgegebenen Richtung (E) eine Vielzahl von den gefüllten Regionen angeordnet sind, eine Abmessung der geschäumten Metallschicht (2211) in der zweiten vorgegebenen Richtung (E) L2 ist, eine Entfernung des Füllstoffs zwischen zwei angrenzenden gefüllten Regionen in der zweiten vorgegebenen Richtung (E) L4 ist und ein Verhältnis L4/L2 größer oder gleich 10 % ist; und die zweite vorgegebene Richtung (E) senkrecht zur ersten vorgegebenen Richtung (D) und zur Dickenrichtung (A) der geschäumten Metallschicht (2211) ist.

## Revendications

1. Cellule de batterie (20), comprenant une enveloppe (21) et un ensemble électrode (22), l'ensemble électrode (22) étant reçu dans l'enveloppe (21), l'ensemble électrode (22) comprenant un séparateur (223) et une plaque d'électrode, la plaque d'électrode comprenant une couche de mousse métallique (2211) ;
une partie de la couche de mousse métallique (2211) est une région remplie, et des pores de la région remplie sont remplis d'une matière de remplissage ; la partie restante de la couche de mousse métallique (2211) est une région non remplie (22110) et des pores de la région non remplie (22110) sont utilisés pour la déposition de lithium métallique ;
dans laquelle la matière de remplissage est un polymère ;
la matière de remplissage s'étend continûment depuis un bord à un autre bord de la couche de mousse métallique (2211), les deux bords étant agencés sur des côtés opposés le long d'une première direction prédéfinie (D) ; et
la première direction prédéfinie (D) est perpendiculaire à une direction de l'épaisseur (A) de la couche de mousse métallique (2211) ;
dans laquelle, dans la direction de l'épaisseur de la couche de mousse métallique (2211), une dimension de la couche de mousse métallique (2211) est H1, et une épaisseur de la matière de remplissage dans une région à remplissage unique est H2, qui satisfont : H2/H2 = (0,95 à 1,05) ;
dans laquelle, dans une deuxième direction prédéfinie (E), une pluralité des régions remplies sont agencées, une dimension de la couche de mousse métallique (2211), dans ladite deuxième direction prédéfinie (E), est L2, une distance de la matière de remplissage entre deux régions remplies adjacentes, dans ladite deuxième direction prédéfinie (E), est L4, et un rapport L4/L2 est supérieur ou égal à 10 % ; et la deuxième direction prédéfinie (E) est perpendiculaire à la première direction prédéfinie (D) et à la direction d'épaisseur (A) de la couche de mousse métallique (2211).

2. Cellule de batterie (20) selon la revendication 1, dans laquelle dans la première direction prédéfinie (D), une dimension de la couche de mousse métallique (2211) est L1 ; et
un angle entre une direction d'extension de la matière de remplissage dans la région remplie et la première direction prédéfinie (D) est α, et satisfait 0° ≤ α ≤ arctan((0,5 × L2)/L1).

3. Cellule de batterie (20) selon la revendication 1 ou 2, dans laquelle une dimension de la matière de remplissage dans une unique région remplie dans la deuxième direction prédéfinie (E) est supérieure ou égale à 1 mm.

4. Cellule de batterie (20) selon l'une quelconque des revendications 1 à 3, dans laquelle une dimension de la matière de remplissage dans une unique région remplie dans la deuxième direction prédéfinie (E) est inférieure ou égale à 4 mm, et/ou dans laquelle, dans la deuxième direction prédéfinie (E), une dimension de la couche de mousse métallique (2211) est L2, une somme des dimensions des matières de remplissage dans les régions remplies est L3, et un rapport L3/L2 est inférieur ou égal à 10 %.

5. Cellule de batterie (20) selon l'une quelconque des revendications 1 à 4 dans laquelle les matières de remplissage dans la pluralité de régions remplies sont distribuées uniformément.

6. Cellule de batterie (20) selon l'une quelconque des revendications 1 à 5, dans laquelle la couche de mousse métallique (2211) comprend un premier bord (22112) et un deuxième bord (22113) qui sont agencés le long d'une direction de longueur (B) de la couche de mousse métallique (2211) ainsi qu'un troisième bord (22114) et un quatrième bord (22115) qui sont agencés le long d'une direction de la largeur (C) de la couche de mousse métallique (2211) ;
la région remplie comprend une première région remplie (22111a) dans laquelle la matière de remplissage s'étend continûment du premier bord (22112) au deuxième bord (22113) ;
et/ou
la région remplie comprend une deuxième région remplie (22111b) dans laquelle la matière de remplissage s'étend continûment du troisième bord (22114) au quatrième bord (22115), éventuellement, dans laquelle la région remplie comprend la première région remplie (22111a) dans laquelle la matière de remplissage s'étend continûment du premier bord (22112) au deuxième bord (22113) ; et
dans la direction de la largeur de la couche de mousse métallique (2211), une dimension de la couche de mousse métallique (2211) est L5, une somme des dimensions de la première région remplie (22111a) est L6, et un rapport L6/L5 est supérieur ou égal à 3 %.

7. Cellule de batterie (20) selon l'une quelconque des revendications 1 à 6, dans laquelle la plaque d'électrode est une plaque d'électrode d'un ensemble électrode (22) qui adopte une structure en gâteau roulé, et la première direction prédéfinie (D) comprend une direction d'enroulement de la structure en gâteau roulé,
éventuellement, la matière de remplissage est un matériau de caoutchouc ;
éventuellement, le matériau de caoutchouc comprend un ou plusieurs d'un caoutchouc naturel, d'un caoutchouc styrène-butadiène, d'un caoutchouc polybutadiène à haute teneur en cis, d'un caoutchouc isoprène, d'un caoutchouc néoprène, d'un caoutchouc butyle, d'un caoutchouc nitrile butadiène ou d'un caoutchouc de silicone.

8. Cellule de batterie (20) selon la revendication 7, dans laquelle, dans la direction de l'épaisseur de la couche de mousse métallique (2211), deux surfaces opposées de la matière de remplissage couvrent deux surfaces opposées de la couche de mousse métallique (2211) respectivement.

9. Cellule de batterie (20) selon l'une quelconque des revendications précédentes, dans laquelle la matière de remplissage comprend une surface de remplissage (22111c) agencée le long de la direction de l'épaisseur de la couche de mousse métallique (2211), la surface de remplissage (22111c) comprend une partie de liaison (2212), et la partie de liaison (2212) est conçue pour lier la plaque d'électrode et un séparateur (223) ensemble, éventuellement, dans laquelle le matériau de la partie de liaison (2212) comprend un adhésif ; et
éventuellement, le matériau de la partie de liaison (2212) comprend un ou plusieurs d'un fluorure de polyvinylidène ou d'un méthacrylate de polyméthyle.

10. Cellule de batterie (20) selon l'une quelconque des revendications 1 à 7, dans laquelle la plaque d'électrode est une plaque d'électrode négative (221), éventuellement, dans laquelle, le long de la direction de l'épaisseur de la couche de mousse métallique (2211), une projection de la matière de remplissage est conçue pour au moins en partie recouvrir une projection d'une région revêtue d'une plaque d'électrode positive (222).

11. Batterie, comprenant une boîte et une pluralité de cellules de batterie selon l'une quelconque des revendications 1 à 10, dans laquelle
la pluralité de cellules de batterie (20) sont reçues dans la boîte.

12. Dispositif électrique, comprenant la cellule de batterie selon l'une quelconque des revendications 1 à 10.

13. Procédé de fabrication d'une plaque d'électrode, comprenant les étapes consistant à :
remplir des pores dans une région partielle d'une couche de mousse métallique (2211) avec une matière de remplissage pour former une région remplie, la partie restante de la couche de mousse métallique (2211) est une région non remplie (22110) et des pores de la région non remplie (22110) sont utilisés pour la déposition de lithium métallique ;
dans laquelle la matière de remplissage est un polymère ;
dans laquelle la matière de remplissage s'étend continûment depuis un bord à un autre bord de la couche de mousse métallique (2211), les deux bords étant agencés sur des côtés opposés le long d'une première direction prédéfinie (D) ; et
la première direction prédéfinie (D) est perpendiculaire à une direction de l'épaisseur (A) de la couche de mousse métallique (2211) ; dans laquelle, dans la direction de l'épaisseur (A) de la couche de mousse métallique (2211), une dimension de la couche de mousse métallique (2211) est H1, et une épaisseur de la matière de remplissage dans une région à remplissage unique est H2, qui satisfont : H2/H2 = (0,95 à 1,05) ;
dans laquelle, dans une deuxième direction prédéfinie (E), une pluralité des régions remplies sont agencées, une dimension de la couche de mousse métallique (2211), dans ladite deuxième direction prédéfinie (E), est L2, une distance de la matière de remplissage entre deux régions remplies adjacentes, dans ladite deuxième direction prédéfinie (E), est L4, et un rapport L4/L2 est supérieur ou égal à 10 % ; et la deuxième direction prédéfinie (E) est perpendiculaire à la première direction prédéfinie (D) et à la direction d'épaisseur (A) de la couche de mousse métallique (2211).

14. Équipement (2000) de fabrication d'une plaque d'électrode, comprenant :
un appareil de fourniture (2100), conçu pour fournir une couche de mousse métallique (2211) ; et
un appareil de remplissage (2200), conçu pour remplir des pores dans une région partielle de la couche de mousse métallique (2211) avec une matière de remplissage pour former une région remplie, la partie restante de la couche de mousse métallique (2211) est une région non remplie (22110) et des pores de la région non remplie (22110) sont utilisés pour la déposition de lithium métallique ;
dans laquelle la matière de remplissage est un polymère ;
dans laquelle l'appareil de remplissage (2200) est conçu pour remplir les pores de telle sorte que la matière de remplissage s'étende continûment depuis un bord à un autre bord de la couche de mousse métallique (2211), les deux bords étant agencés sur des côtés opposés le long d'une première direction prédéfinie (D) ; et
la première direction prédéfinie (D) est perpendiculaire à une direction de l'épaisseur (A) de la couche de mousse métallique (2211) ;
dans laquelle, dans la direction de l'épaisseur (A) de la couche de mousse métallique (2211), une dimension de la couche de mousse métallique (2211) est H1, et une épaisseur de la matière de remplissage dans une région à remplissage unique est H2, qui satisfont : H2/H2 = (0,95 à 1,05) ;
dans laquelle, dans une deuxième direction prédéfinie (E), une pluralité des régions remplies sont agencées, une dimension de la couche de mousse métallique (2211), dans ladite deuxième direction prédéfinie (E), est L2, une distance de la matière de remplissage entre deux régions remplies adjacentes, dans ladite deuxième direction prédéfinie (E), est L4, et un rapport L4/L2 est supérieur ou égal à 10 % ; et la deuxième direction prédéfinie (E) est perpendiculaire à la première direction prédéfinie (D) et à la direction d'épaisseur (A) de la couche de mousse métallique (2211).
